# EUROPEAN PATENT APPLICATION

(11) **EP 4 664 966 A1**
(43) Date of publication of application: **17.12.2025**
(21) Application number: 23920380.5
(22) Date of filing: 08.02.2023
(51) Int. Cl.: H04W 24/02

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); CUI, Shengjiang, Dongguan, Guangdong 523860 (CN); ZHANG, Zhi, Dongguan, Guangdong 523860 (CN)
(74) Representative: Mewburn Ellis LLP
(86) International application number: PCT/CN2023/074980
(87) International publication number: WO 2024/164171

(57) **Abstract**

A wireless communication method and device are provided. The method includes the following. A first device receives a first target signal and a second target signal on a target time unit, where the first target signal includes a first signal and a second signal, the second target signal includes a third signal, the first signal and the third signal are transmitted by a second device through active transmission, the second signal is transmitted by a third device through backscattering of a fourth signal, and the first signal, the third signal, and the fourth signal each includes a pilot signal.

## Description

### TECHNICAL FIELD

The present disclosure relates to the field of communication, and specifically to a wireless communication method and device.

### BACKGROUND

Zero-power terminals can implement backscattering communication based on radio signals. Due to a low-complexity characteristic of the zero-power terminal, the zero-power terminal only supports a simple modulation mode, for example, amplitude shift keying (ASK). Therefore, when the zero-power terminal accesses a system, a receiver in the system receives a signal sent by the zero-power terminal by using an envelope detection manner, affecting signal reception performance.

### SUMMARY

The present disclosure provides a wireless communication method and device, which are conducive to improving the reception performance for signals transmitted by zero-power devices.

In a first aspect, a wireless communication method is provided. The method includes the following. The first device receives a first target signal and a second target signal on a target time unit, where the first target signal includes a first signal and a second signal, the second target signal includes a third signal, the first signal and the third signal are transmitted by a second device through active transmission, the second signal is obtained by backscattering a fourth signal by a third device, and the first signal, the third signal, and the fourth signal each include a pilot signal.

In a second aspect, a wireless communication method is provided. The method includes the following. A third device backscatters a fourth signal in a first time period of a target time unit, and does not backscatter the fourth signal in a second time period of the target time unit, where the fourth signal is transmitted by a second device through active transmission, and the fourth signal includes a pilot signal.

In a third aspect, a wireless communication method is provided. The method includes the following. A second device transmits a first signal during a first time period in a target time unit, and transmits a third signal during a second time period in the target time unit, where the first signal and the third signal are transmitted through active transmission, the first signal and the third signal each include a pilot signal, and the first signal is used for a third device to perform backscattering during the first time period.

In a fourth aspect, a communication device is provided. The communication device is configured to perform the method according to the first aspect or any implementation thereof. Specifically, the communication device includes functional modules configured to perform the method according to the first aspect or any implementation thereof.

In a fifth aspect, a communication device is provided. The communication device is configured to perform the method according to the second aspect or any implementation thereof. Specifically, the communication device includes functional modules configured to perform the method according to the second aspect or any implementation thereof.

In a sixth aspect, a communication device is provided. The communication device is configured to perform the method according to the third aspect or any implementation thereof. Specifically, the communication device includes functional modules configured to perform the method according to the third aspect or any implementation thereof.

In a seventh aspect, a communication device is provided. The communication device includes a processor and a memory. The memory is configured to store a computer program, and the processor is configured to invoke and run the computer program stored in the memory to perform the method according to any one of the first to third aspects or any implementation thereof.

In an eighth aspect, a chip is provided. The chip is configured to implement the method according to any one of the first to third aspects or any implementation thereof. Specifically, the chip includes a processor configured to invoke and run a computer program from a memory, so that a device equipped with the chip performs the method according to any one of the first to third aspects or any implementation thereof.

In a ninth aspect, a computer-readable storage medium is provided. The computer-readable storage medium is configured to store a computer program, and the computer program is configured to cause a computer to perform the method according to any one of the first to third aspects or any implementation thereof.

In a tenth aspect, a computer program product is provided. The computer program product includes computer program instructions, and the computer program instructions are configured to cause a computer to perform the method according to any one of the first to third aspects or any implementation thereof.

In an eleventh aspect, a computer program is provided. When the computer program is run on a computer, the computer is caused to perform the method according to any one of the first to third aspects or any implementation thereof.

With the foregoing technical solution, in both cases where the third device performs backscattering and where a reflecting device does not perform backscattering, the first device uses the pilot signal of a primary system to perform channel estimation, thereby obtaining channel information of a backscattering link of the third device. Further, based on the channel information of the backscattering link, the first device receives data transmitted by the third device, which can improve data reception performance.

### BRIEF DESCRIPTION OF THE DRAWINGS

FIG. 1 is a schematic diagram of a communication system architecture provided by an embodiment of the present disclosure.
FIG. 2 is a schematic diagram of a zero-power communication system according to an example of the present disclosure.
FIG. 3 is a schematic diagram of energy harvesting according to an embodiment of the present disclosure.
FIG. 4 is a schematic diagram of backscattering communication according to an embodiment of the present disclosure.
FIG. 5 is a circuit schematic diagram of resistive load modulation according to an embodiment of the present disclosure.
FIG. 6 is an example of an NRZ coding rule.
FIG. 7 is an example of a Unipolar RZ coding rule.
FIG. 8 is an example of a Manchester coding rule.
FIG. 9 is an example of a Miller coding rule.
FIG. 10 is a schematic diagram of a system applicable to an embodiment of the present disclosure.
FIG. 11 is a schematic diagram of a symbiotic communication system model provided by an embodiment of the present disclosure.
FIG. 12 is a schematic diagram of signal relationship in a symbiotic communication system.
FIG. 13 is a schematic diagram of a wireless communication method provided by an embodiment of the present disclosure.
FIG. 14 is a schematic diagram of a composition of a backscatter signal provided by an embodiment of the present disclosure.
FIG. 15 is a schematic diagram of another wireless communication method provided by an embodiment of the present disclosure.
FIG. 16 is a schematic diagram of downlink signal-based backscattering provided by an embodiment of the present disclosure.
FIG. 17 is a schematic diagram of uplink channel-based backscattering provided by an embodiment of the present disclosure.
FIG. 18 is a distribution diagram of channel estimation time units provided by an embodiment of the present disclosure.
FIG. 19 is a schematic diagram of a channel estimation or data transmission method provided by an embodiment of the present disclosure.
FIG. 20 is a schematic block diagram of a communication device provided by an embodiment of the present disclosure.
FIG. 21 is a schematic block diagram of another communication device provided by an embodiment of the present disclosure.
FIG. 22 is a schematic block diagram of yet another communication device provided by an embodiment of the present disclosure.
FIG. 23 is a schematic block diagram of still another communication device provided by an embodiment of the present disclosure.
FIG. 24 is a schematic block diagram of a chip provided by an embodiment of the present disclosure.
FIG. 25 is a schematic block diagram of a communication system provided by an embodiment of the present disclosure.

### DETAILED DESCRIPTION

The following will describe technical solutions of embodiments of the present disclosure with reference to the accompanying drawings in embodiments of the present disclosure. Apparently, the embodiments described herein are merely some embodiments, rather than all embodiments, of the present disclosure. Based on the embodiments of the present disclosure, all other embodiments obtained by those of ordinary skill in the art without creative effort shall fall within the protection scope of the present disclosure.

The technical solutions of embodiments of the present disclosure are applicable to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), a wireless fidelity (Wi-Fi), a 5^{th}-generation (5G) communication system, cellular IoT system, cellular passive IoT system, or other communication systems, etc.

Generally speaking, a conventional communication system generally supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, vehicle to everything (V2X) communication, etc. Embodiments of the present disclosure can also be applied to these communication systems.

Optionally, the communication system in embodiments of the present disclosure may be applied to a carrier aggregation (CA) scenario, or may be applied to a dual connectivity (DC) scenario, or may be applied to a standalone (SA) scenario.

Optionally, the communication system in embodiments of the present disclosure is applicable to an unlicensed spectrum, and an unlicensed spectrum may be regarded as a shared spectrum. Alternatively, the communication system in embodiments of the present disclosure is applicable to a licensed spectrum, and a licensed spectrum may be regarded as a non-shared spectrum.

Various embodiments of the present disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

In the present disclosure, the network device can be a device for communicating with mobile devices. The network device can be an Access Point (AP) in WLAN, a Base Transceiver Station (BTS) in GSM or CDMA, a NodeB (NB) in WCDMA, an Evolutional Node B (eNB or eNodeB) in LTE, or a relay station or access point, or a vehicle-mounted device, a wearable device, and a network device (gNB) in the NR network, or a network device in the cellular IoT, or a network device in the cellular passive IoT, or a network device in the future evolved PLMN network, or a network device in the NTN network, etc.

By way of example but not limitation, in the present disclosure, the network device can have mobility characteristics. for example, the network device can be a mobile device. Optionally, the network device can be a satellite, balloon station. For example, the satellite can be a low earth orbit (LEO) satellite, medium earth orbit (MEO) satellite, geostationary earth orbit (GEO) satellite, high elliptical orbit (HEO) satellite, etc. Optionally, the network device can also be a base station set up in locations such as land and water.

In the present disclosure, the network device can provide services for a cell. The terminal device communicates with the network device through the transmission resources (for example, frequency domain resources, or spectrum resources) used for the cell. The cell can be a cell corresponding to the network device (for example, a base station). The cell can belong to a macro base station or a base station corresponding to a small cell. The small cell here can include: Metro cell, Micro cell, Pico cell, Femto cell, etc. These small cells have the characteristics of small coverage and low transmission power, and are suitable for providing high-speed data transmission services.

The terminal device may be a station (ST) in a WLAN, a cellular radio telephone, a cordless telephone, a session initiation protocol (SIP) telephone, a wireless local loop (WLL) station, a personal digital assistant (PDA), a handheld device or a computing device with wireless communication functions, other processing devices coupled with a wireless modem, an in-vehicle device, a wearable device, and a terminal device in a next-generation communication system, for example, a terminal device in an NR network, a terminal device in a future evolved public land mobile network (PLMN), a terminal device in the cellular IoT, or a terminal device in the cellular passive IoT, etc.

In embodiments of the present disclosure, the terminal device may be deployed on land, which includes indoor or outdoor, handheld, wearable, or in-vehicle. The terminal device may also be deployed on water (such as ships, etc.). The terminal device may also be deployed in the air (such as airplanes, balloons, satellites, etc.).

In embodiments of the present disclosure, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, or a wireless terminal device in smart home.

By way of explanation rather than limitation, in embodiments of the present disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

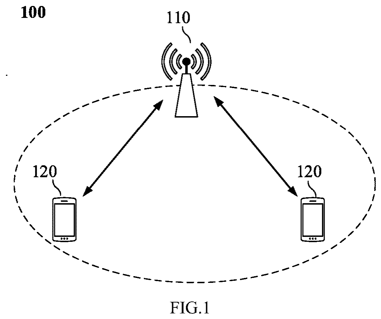

For example, FIG. 1 illustrates a communication system 100 applied in the present disclosure. The communication system 100 can include a network device 110, which is a device for communicating with a terminal device 120 (or also called a communication terminal or a terminal). The network device 110 can provide communication coverage for a specific geographic area and can communicate with terminal devices located within that coverage area.

FIG. 1 exemplarily illustrates one network device and two terminal devices. Optionally, the communication system 100 can include multiple network devices, and the coverage area of each network device can include other numbers of terminal devices, which is not limited in the present disclosure.

Optionally, the communication system 100 can also include other network entities such as a network controller, a mobile management entity, etc., which is not limited in the present disclosure.

It may be understood that, in embodiments of the present disclosure, a device with communication functions in a network/system may be referred to as a "communication device". Taking the communication system 100 illustrated in FIG. 1 as an example, the communication device may include the network device 110 and the terminal device(s) 120 that have communication functions. The network device 110 and the terminal device(s) 120 may be the devices described above and will not be elaborated again herein. The communication device may further include other devices such as a network controller, an MME, or other network entities in the communication system 100, and embodiments of the present disclosure are not limited in this regard.

It may be understood that, the terms "system" and "network" herein are usually used interchangeably throughout this disclosure. The term "and/or" herein only describes an association relationship between associated objects, which means that there may be three relationships. For example, *A* and/or *B* may mean *A* alone, both *A* and *B* exist, and *B* alone. In addition, the character "/" herein generally indicates that the associated objects are in an "or" relationship.

It may be understood that, "indication" referred to in embodiments of the present disclosure may be a direct indication, may be an indirect indication, or may mean that there is an association relationship. For example, *A* indicates *B* may mean that *A* directly indicates *B,* for instance, *B* can be obtained according to *A;* may mean that *A* indirectly indicates *B,* for instance, *A* indicates C, and *B* can be obtained according to C; or may mean that that there is an association relationship between *A* and *B.*

In the elaboration of embodiments of the present disclosure, the term "correspondence" may mean that there is a direct or indirect correspondence between the two, may mean that there is an association between the two, or may mean a relationship of indicating and indicated or configuring and configured, etc.

In embodiments of the present disclosure, the "pre-defined" may be implemented by pre-saving a corresponding code or table in a device (for example, including the terminal device and the network device) or in other manners that can be used for indicating related information, and the present disclosure is not limited in this regard. For example, the "predefined" may mean defined in a protocol.

In embodiments of the present disclosure, the "protocol" may refer to a communication standard protocol, which may include, for example, an LTE protocol, an NR protocol, or a related protocol applied to a future communication system, which is not limited in the present disclosure.

For a better understanding of the technical solutions of the present disclosure, the related technologies involved in the present disclosure are explained below.

### I. Zero-Power Communication

The key technologies of zero-power communication include energy (power) harvesting, backscattering communication, and low-power technology.

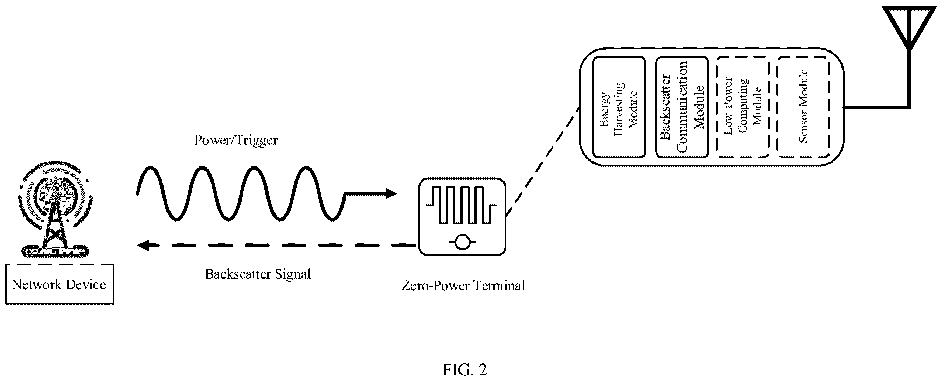

As illustrated in FIG. 2, a typical zero-power communication system (such as an RFID system) includes a network device (such as an RFID reader) and a zero-power terminal (such as an electronic tag). The network device is configured to transmit a wireless power supply signal and a downlink communication signal to the zero-power terminal, and receive a backscatter signals from the zero-power terminal. A basic zero-power terminal includes an energy harvesting module, a backscattering communication module, and a low-power computing module. In addition, the zero-power terminal can also have a memory or sensor to store some basic information (such as item identification) or other sensor data such as ambient temperature, humidity, etc.

For example, the energy harvesting module can harvest the energy carried by radio waves in space (as illustrated in FIG. 2, the radio waves transmitted by the network device) to drive the low-power computing module of the zero-power terminal and implement backscattering communication. After obtaining energy, the zero-power terminal can receive a control command from the network device and send data to the network device through backscattering based on the control command. The data sent can be the basic information stored in the zero-power terminal itself (such as identity identification or pre-written information, such as the production date, brand, and manufacturer of the product). The zero-power terminal can also be equipped with various sensors to report the data collected by the sensors based on the zero-power mechanism.

The key technologies of zero-power communication are explained below.

### 1. RF Energy (Power) Harvesting

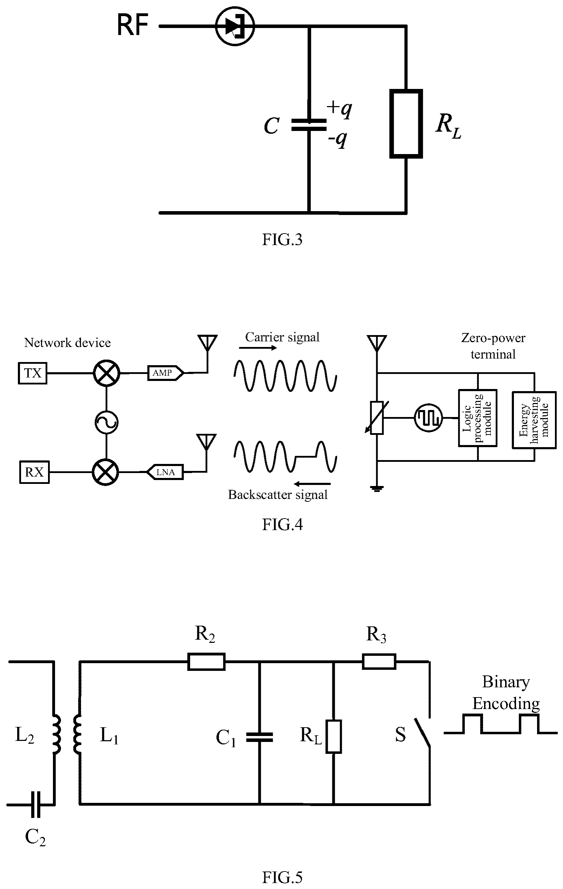

As illustrated in FIG. 3, an RF energy harvesting module is configured to collect energy from electromagnetic waves in space based on the principle of electromagnetic induction, thereby obtaining the energy required to power the zero-power terminal, such as for driving a low-power demodulation and modulation module(s), a sensor(s), memory access, and the like. As such, the zero-power terminal does not require a conventional battery.

### 2. Backscattering Communication

As illustrated in FIG. 4, the zero-power terminal receives a carrier signal transmitted by the network device and modulates the carrier signal to embed the information to be transmitted, and then radiates the modulated signal via an antenna(s). This information transmission process is referred to as backscattering communication. Backscattering is closely related to load modulation. Load modulation means adjustment and control of circuit parameters of an oscillating loop in the zero-power terminal based on the rhythm of a data stream, thereby changing parameters such as an impedance of the zero-power terminal to achieve modulation. Load modulation mainly include resistive load modulation and capacitive load modulation. In resistive load modulation, a resistor is connected in parallel with a load and is switched on or off under the control of a binary data stream, as illustrated in FIG. 5. The on/off switching of the resistor may cause a voltage change in the circuit, thereby achieving amplitude shift keying (ASK) modulation, i.e., achieving signal modulation and transmission by adjusting the amplitude of the backscatter signal of the zero-power terminal. Similarly, in capacitive load modulation, the circuit's resonant frequency can be changed by switching a capacitor on or off, thereby achieving frequency shift keying (FSK) modulation, i.e., achieving signal modulation and transmission by adjusting the operating frequency of the backscatter signal of the zero-power terminal.

It can be seen that the zero-power terminal uses load modulation to modulate the incoming wave signal, thereby realizing the backscattering communication. Therefore, the zero-power terminal has significant advantages:
(1) The zero-power terminal does not actively transmit signals, and thus does not need a complex RF chain, such as PA, RF filters, etc.;
(2) The zero-power terminal does not need to actively generate high-frequency signals, and thus does not need a high-frequency crystal oscillator;
(3) With the help of backscattering communication, the zero-power terminal does not consume its own power for signal transmission.

### 3. Coding Techniques

For data to be transmitted by a zero-power terminal, various types of codes may be used to represent binary "1" and "0". Radio frequency identification (RFID) systems typically use one of the following coding schemes: non-return-to-zero (NRZ) coding, Manchester coding, unipolar return-to-zero (RZ) coding, differential bi-phase (DBP) coding, differential coding, pulse interval encoding (PIE), bi-phase space coding (FM0), Miller coding and differential coding, etc. Simply put, in different coding techniques, different pulse signals are used to represent binary 0 and 1.

### 3.1 Non-Return-to-Zero (NRZ) coding

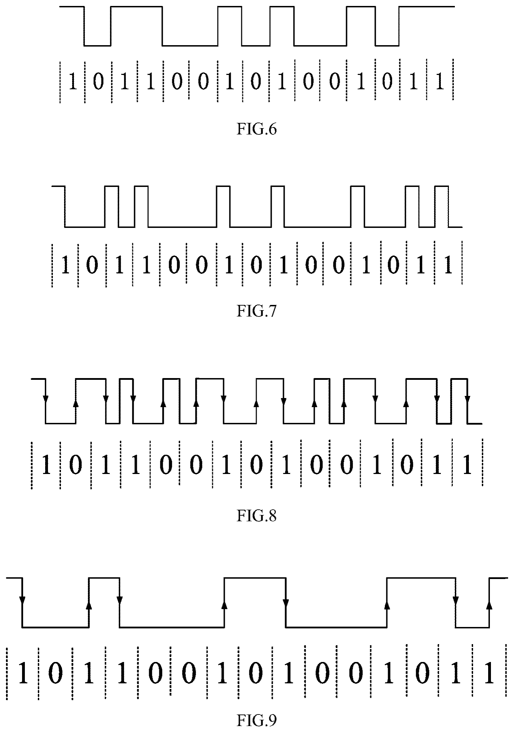

Non-Return-to-Zero coding uses a high level to represent binary "1" and a low level to represent binary "0". FIG. 6 is an example of the NRZ coding rule. As illustrated in FIG. 6, the waveform has no gap between symbols, and the code is transmitted throughout the entire symbol time, so it is called Non-Return-to-Zero encoding.

### 3.2 Unipolar Return-to-Zero coding

For Unipolar Return-to-Zero (RZ) coding, when a code "1" is transmitted, a positive current is emitted, but a duration of the positive current is shorter than a time width of a symbol, that is, a narrow pulse is emitted. When a code "0" is transmitted, no current is sent at all. FIG. 7 is an example of the Unipolar RZ coding rule.

By comparing NRZ and Unipolar RZ coding, it can be seen that both are unipolar codes, but the duty cycle of NRZ is 100%, while the duty cycle of Unipolar RZ is 50%.

### 3.3 Manchester coding

Manchester encoding is also called split-phase coding or biphase code. In Manchester coding, the phase difference of voltage transition is used to distinguish "1" and "0". Specifically, a transition from high to low represents "1", and a transition from low to high represents "0". FIG. 8 is an example of the Manchester coding rule.

### 3.4 Miller coding

Miller coding is an improved version of Manchester coding. In Miller coding, any edge in half a bit period represents binary "1", while an unchanged level in the next bit period represents binary "0". In other words, in Miller coding, data "1" is represented by level transition at the center of the bit, and data "0" is represented by an unchanged level at the center of the bit. Additionally, when there are consecutive binary "0s", a level transition occurs at the end of this bit. FIG. 9 is an example of the Miller coding rule. As illustrated in FIG. 9, for Miller coding, a level change occurs at the beginning of the bit period, which makes it easier for the receiver to rebuild the bit timing.

### 3.5 Differential Biphase (DBP) coding

Differential Biphase (DBP) coding uses an edge in half a bit period to represent binary "0", while the absence of an edge represents binary "1". Additionally, the level is inverted at the beginning of each bit period.

### 3.6 Differential coding

For differential coding, each binary "1" to be transmitted causes a change in the signal level, while the signal level remains unchanged for binary "0".

For a better understanding of the present disclosure, the related power supply signal, scheduling signal, and carrier signal in zero-power communication are explained below.

### 1. Power Supply Signal

The power supply signal is an energy source for the zero-power terminal to harvest energy.

The power supply signal can be transmitted by a base station, a smartphone, a smart gateway, a charging station, a micro base station, etc.

A frequency band of the radio wave used for power supply can be a low frequency, medium frequency, or high frequency band, etc.

In terms of the waveform, the radio wave used for power supply can be a sine wave, square wave, triangular wave, pulse, rectangular wave, etc.

In addition, the power supply signal can be a continuous wave or a non-continuous wave (that is, a certain time interruption is allowed).

Optionally, the power supply signal can be an existing signal in the 3GPP standard. For example, sounding reference signal (SRS), physical uplink shared channel (PUSCH), physical random access channel (PRACH), physical uplink control channel (PUCCH), physical downlink control channel (PDCCH), physical downlink shared channel (PDSCH), physical broadcast channel (PBCH), or Wi-Fi signal or Bluetooth signal.

Optionally, the power supply signal can also be realized by introducing a new signal, such as introducing a signal specifically for power supply.

### 2. Trigger Signal or Scheduling Signal

The trigger signal is used to trigger or schedule the zero-power terminal to transmit data.

The trigger signal can be transmitted by a base station, smartphone, smart gateway, etc.

In terms of frequency band, the radio wave used for triggering or scheduling can be a low frequency, medium frequency, or high frequency, etc.

In terms of waveform, the radio wave used for triggering or scheduling can be a sine wave, square wave, triangular wave, pulse, rectangular wave, etc.

In addition, the trigger signal can be a continuous wave or a non-continuous wave (that is, a certain time interruption is allowed).

Optionally, the trigger signal can be an existing signal in the 3GPP standard. For example, SRS, PUSCH, PRACH, PUCCH, PDCCH, PDSCH, PBCH, or Wi-Fi signal or Bluetooth signal.

Optionally, the trigger signal can also be realized by introducing a new signal, such as introducing a signal specifically for triggering or scheduling.

### 3. Carrier Signal

The carrier signal is used by the zero-power terminal to generate a backscatter signal. For example, the zero-power terminal can modulate the received carrier signal according to the information to be sent to form a backscatter signal.

The carrier signal can be transmitted a base station, smartphone, smart gateway, etc.

In terms of frequency band, the radio wave used as the carrier signal can be a low frequency, medium frequency, high frequency, etc.

In terms of waveform, the radio wave used as the carrier signal can be a sine wave, square wave, triangular wave, pulse, rectangular wave, etc.

In addition, the carrier signal can be a continuous wave or a non-continuous wave (that is, a certain time interruption is allowed).

Optionally, the carrier signal can be an existing signal in the 3GPP standard. For example, SRS, PUSCH, PRACH, PUCCH, PDCCH, PDSCH, PBCH, or WIFI signal or Bluetooth signal.

Optionally, the carrier signal can also be realized by introducing a new signal, such as a signal specifically for generating a backscatter signal.

It should be noted that in the present disclosure, the power supply signal, scheduling signal, and carrier signal can be the same signal, or can be different signals. For example, the power supply signal can also be used as the carrier signal, and the scheduling signal can also be used as the carrier signal.

Zero-power communication, with its significant advantages of extremely low cost, zero power, and small size, can be widely applied in various industries, such as logistics, smart warehousing, smart agriculture, energy power, industrial Internet, and other vertical industries, and can also be applied in personal applications such as smart wearables and smart homes.

In some scenarios, based on the energy source and usage of the zero-power terminal, the zero-power terminal can be divided into the following types:

### 1. Passive Zero-Power Terminal

The zero-power terminal (such as the electronic tag in an RFID system) does not require an internal battery. When the zero-power terminal is close to a network device (such as the RFID reader), the zero-power terminal is within the near field formed by the antenna radiation of the network device. Therefore, the antenna of the zero-power terminal generates an induced current through electromagnetic induction, and the induced current drives the low-power chip circuit of the zero-power terminal to realize demodulation of a forward link signal and modulation of a backward link (or called reflection link) signal. For a backscattering link, the zero-power terminal transmit signals through backscattering.

It can be seen that neither the forward link nor the backward link of the passive zero-power terminal requires an internal battery to drive, which is a truly zero-power terminal.

The passive zero-power terminal does not need a battery, and its RF circuit and baseband circuit are very simple. For example, a low-noise amplifier (LNA), a power amplifier (PA), a crystal oscillator, an analog-to-digital converter (ADC), etc, are not needed. Therefore, the passive zero-power terminal has many advantages such as small size, light weight, low price, and long service life.

### 2. Semi-Passive Zero-Power Terminal

The semi-passive zero-power terminal also does not have a conventional battery, but can use a RF energy harvesting module to harvest energy of radio waves and store the harvested energy in an energy storage unit (such as a capacitor). After the energy storage unit obtains energy, the low-power chip circuit of the zero-power terminal can be driven to realize the demodulation of the forward link signal and the modulation of the backward link signal. For the backscattering link, the zero-power terminal transmit signals through backscattering.

It can be seen that neither the forward link nor the backward link of the semi-passive zero-power terminal requires an internal battery to drive. Although the energy stored in the capacitor is used during operation, the energy comes from the radio wave energy harvested by the energy harvesting module, so the semi-passive zero-power terminal is also a truly zero-power terminal.

The semi-passive zero-power terminal inherits many advantages of the passive zero-power terminal, so thus has many advantages such as small size, light weight, low price, and long service life.

### 3. Active Zero-Power Terminal

In some scenarios, the zero-power terminal can also be an active zero-power terminal. This type of device can have an internal battery. The battery is used to drive the low-power chip circuit of the zero-power terminal to realize the demodulation of the forward link signal and the modulation of the backward link signal. However, for the backscattering link, the zero-power terminal transmits signals through backscattering. Therefore, the "zero-power" of this type of device is mainly reflected in that the backward link signal transmission does not require the terminal's own power but is achieved in the backscattering manner.

The active zero-power terminal has an internal battery to power the RFID chip, which increases the read/write distance of the active zero-power terminal and improves the reliability of communication. Therefore, the active zero-power terminal is used in some scenarios with relatively high requirements for communication distance and read/write latency.

In some scenarios, based on the transmitter type, zero-power devices can be divided into the following types:

### (1) Zero-power device based on backscattering

This type of zero-power device transmits uplink data using the backscattering method as described above. This type of device does not have an active transmitter with active transmission capability, but only have a transmitter with backscattering. Therefore, when this type of terminal performs data transmission, the network device is required to provide a carrier, and this type of terminal performs data transmission using backscattering based on the carrier.

### (2) Zero-power device based on an active transmitter

This type of zero-power device performs uplink data transmission using an active transmitter with active transmission capability. Therefore, when transmitting data, this type of zero-power device can transmit data using its own active transmitter without requiring the network device to provide a carrier. The active transmitter applicable to the zero-power device may be, for example, an ultra-low-power ASK or ultra-low-power FSK transmitter. Under the condition of transmitting a signal of 100 µW, the overall power consumption can be reduced to 400 µW - 600 µW.

### (3) Zero-power device supporting both backscattering and active transmitters

This type of zero-power device supports both a backscattering transmitter and an active transmitter. This type of zero-power device may determine, according to different conditions (such as power status or available ambient energy) or based on the scheduling of the network device, to use which transmission method, i.e., whether to use the active transmitter or the backscattering transmitter for signal transmission.

With the vigorous development of the IoT, the existing IoT communication technologies are no longer able to meet the IoT communication requirements in many scenarios, such as:
1. Harsh Communication Environments
   In some IoT scenarios, extreme environments such as high temperature, extremely low temperature, high humidity, high pressure, high radiation, or high-speed motion may be encountered. Examples include ultra-high voltage substations, high-speed train tracks, cold regions, industrial production lines, etc. In these scenarios, due to limitations of the operating environment of conventional power supplies, existing IoT terminals cannot operate. Moreover, extreme environments are also unfavorable for IoT maintenance, such as battery replacement.
2. Extremely Small Terminal Form Requirements
   Some IoT communication scenarios, such as food traceability, goods circulation, and smart wearables, require terminals to be extremely small in size for convenient use in such scenarios. For example, IoT terminals used for goods management in circulation are often implemented as electronic tags, which are embedded in product packaging in a very compact form. Another example is lightweight wearable devices, which can improve the user experience while meeting user needs.
3. Extremely Low-Cost IoT Communication Requirements
   Many IoT communication scenarios require that the cost of IoT terminals be sufficiently low to improve competitiveness compared with other alternative technologies. For example, in logistics or warehousing scenarios, to facilitate the management of a large number of circulating items, IoT terminals can be attached to each item, and communication between the terminal and the logistics network can achieve precise management throughout the entire logistics process and life cycle. These scenarios require IoT terminal prices to be sufficiently competitive.

Therefore, to cover these unmet IoT communication needs, the cellular network also needs to develop ultra-low-cost, ultra-small, battery-free/maintenance-free IoT, and zero-power IoT can precisely meet this demand.

Zero-power IoT (Internet of Things, IoT) can also be called ambient power-enabled IoT (ambient IoT or AMP IoT for short). Zero-power devices can also be called ambient IoT devices or AMP IoT devices. Ambient IoT devices can refer to IoT devices that use various ambient energies, such as wireless radio frequency energy, light energy, solar energy, thermal energy, mechanical energy, and other ambient energies. These devices may not have energy storage capabilities or may have very limited energy storage capabilities, such as using capacitors with a capacity of only a few tens of uF.

In some embodiments, the ambient IoT device may be used in at least the following four types of scenarios:
1. object identification, such as logistics management, management of products in production lines, and supply chain management;
2. environmental monitoring, such as monitoring of temperature, humidity, and harmful gas in operating or natural environments;
3. positioning, such as indoor positioning, smart item locating, and production line item positioning;
4. intelligent control, such as intelligent control of various appliances in smart homes (turning on/off air conditioners, adjusting temperature), and intelligent control of various facilities in agricultural greenhouses (automatic irrigation, fertilization).

With the increase of 5G industry applications, the types of connected objects and application scenarios are increasing, and there are higher requirements for the cost and power consumption of communication terminals. Battery-free, low-cost passive IoT devices have become a key technology for cellular IoT, enriching the types and numbers of terminals connected to the 5G network and truly realizing the Internet of Everything. Passive IoT devices can be based on zero-power communication technology, such as RFID technology, and extended to be suitable for cellular IoT.

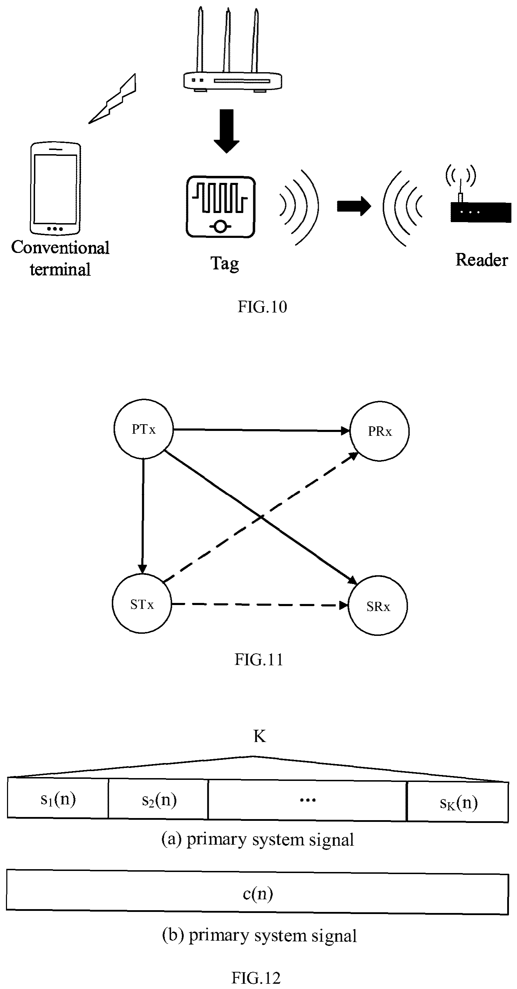

In a typical ambient backscattering communication system, the reflecting device (such as an electronic tag) can use the radio waves in space to realize backscattering communication. As illustrated in FIG. 10, a router and a conventional terminal constitute a primary system for communication, and the reflecting device performs backscattering modulates on a downlink signal sent by the router, thereby transmitting information it needs to send to the reader. The reflecting device and the reader constitute a secondary system supported by backscattering communication technology.

In the above system model, since the secondary system and the primary system use the same spectrum, the communication in the secondary system may interfere with the primary system communication link, that is, the backscatter signal from the reflecting device may be aliased with the primary system signal and cause interference to the primary system receiver. At this time, although the secondary system using backscattering benefits, the data transmission in the primary system may be damaged.

To solve the above problem, the concept of symbiotic communication (symbiotic radio) is proposed. Symbiotic communication is based on backscattering and coordinates between the primary and secondary systems, so that not only the interference of the backscatter signal from the secondary system to the primary system is eliminated, but also the backscatter signal is converted into a beneficial signal for the primary system.

In the symbiotic communication system model illustrated in FIG. 11, a primary transmitter (PTx) and a primary receiver (PRx) constitute a primary system, and a secondary transmitter (STx) and a secondary receiver (SRx) constitute a secondary system. The STx uses a signal transmitted by the PTx to realize backscattering modulation. As illustrated in FIG. 12, a chip width (Cp) of the backscatter signal from the secondary system and a chip width (Cs) of the signal from the primary system satisfy a K-fold relationship, that is, Cp = K*Cs. Therefore, the backscatter signal does not change within a time-domain interval corresponding to K primary system chips. Thus, when the primary system performs coherent demodulation with K chips as a unit, the backscatter signal from the secondary system is equivalent to an additional multipath signal mixed into the primary received signal of the primary system. Therefore, with such a constraint, while the secondary system completes its own communication by backscattering relying on the signal from the primary system, the secondary system does not interfere with the primary system. Instead, the performance of the primary system is improved by providing the multipath signal. Since the subtle relationship between the primary and secondary systems is similar to the symbiotic relationship in biology, the above communication system model is named the symbiotic communication model.

Symbiotic communication not only solves the wireless power supply problem of zero-power communication but also solves the spectrum problem of zero-power communication, allowing zero-power communication to share the spectrum of traditional communication and coexist well with traditional communication on the same spectrum. Therefore, symbiotic communication is expected to become an important implementation method of zero-power communication.

In some implementations where the backscatter device performs signal transmission, the primary system receiver may use envelope detection or similar methods for signal reception and demodulation, which affects the signal reception performance.

In view of this, the present disclosure provides a technical solution. The primary system receiver can estimate the channel information of the backscattering link of the backscatter device when receiving signals, and further perform channel compensation based on this channel information, thereby improving the signal reception performance. Alternatively, the primary receiver can also perform channel estimation on signals received in different time periods, and based on the channel estimation results in different time periods, determine the bit information transmitted by the reflecting device, thereby realizing the data reception of the reflecting device.

For a better understanding of the technical solution of the present disclosure, the specific embodiments of the present disclosure will be described in detail below. The above related technologies, as optional solutions, can be combined with the technical solution of the present disclosure in any way, which fall within the scope of protection of the present disclosure. The present disclosure includes at least the following contents.

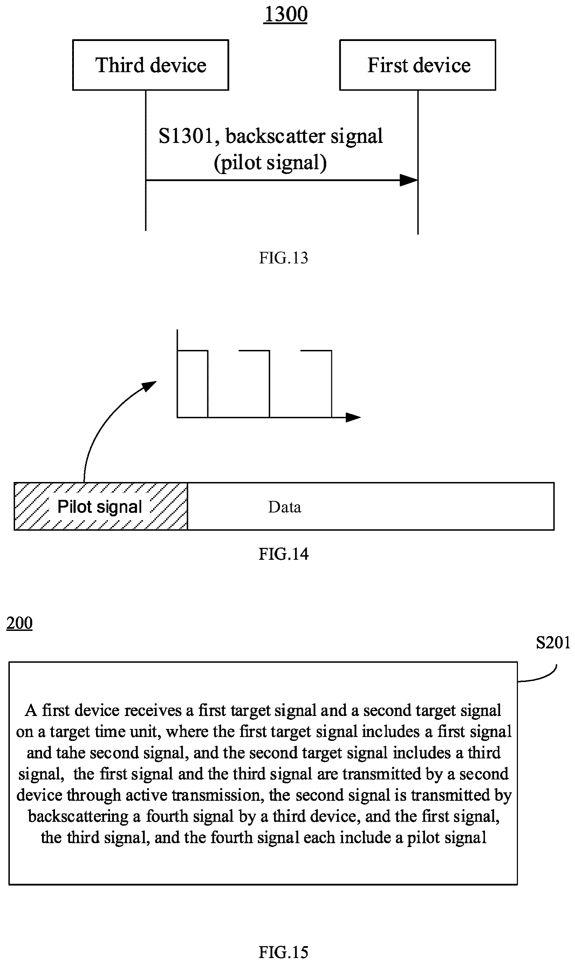

FIG. 13 is a schematic diagram of a wireless communication method 1300 according to the present disclosure. As illustrated in FIG. 13, the method 1300 includes at least part of the following content.

At S1310, a third device performs backscattering based on a signal transmitted by a second device to obtain a backscatter signal, where the backscatter signal includes a pilot signal.

Correspondingly, a first device receives the backscatter signal.

In some embodiments, the second device transmits the signal through active emission.

In some embodiments, the first device can be a primary system receiver. For example, the first device can be a network device, such as a base station in a cellular communication system, or an AP in a Wi-Fi system. Alternatively, the first device can be a terminal device, such as a conventional terminal in the cellular communication system, or a STA in the Wi-Fi system.

In some embodiments, the second device can be a primary system transmitter. For example, the second device can be a terminal device, such as a conventional terminal in a cellular communication system, or a STA in a Wi-Fi system. Alternatively, the second device can be a network device, such as a base station in the cellular communication system, or an AP in the Wi-Fi system.

In the present disclosure, a conventional terminal refers to a terminal device that does not communicate through backscattering.

In some embodiments, the third device can be a secondary system transmitter.

In some embodiments, the third device is also known as a reflecting device, a backscatter device (BD), a zero-power device, a zero-power terminal, or an ambient power-enabled IoT device.

In some specific embodiments, the first device is a network device in a cellular system, the second device is a terminal device in the cellular system, and the third device is a reflecting device.

In other specific embodiments, the first device is a terminal device in a cellular system, the second device is a network device in the cellular system, and the third device is a reflecting device.

In yet other specific embodiments, both the first device and the second device are terminal devices in a cellular system, and the third device is a reflecting device.

In some specific embodiments, the first device is an AP in a Wi-Fi system, the second device is a STA in a Wi-Fi system, and the third device is a reflecting device.

In some specific embodiments, the first device is a STA in a Wi-Fi system, the second device is an AP in a Wi-Fi system, and the third device is a reflecting device.

In some embodiments, the first device can perform channel estimation on a backscattering link of the third device based on the pilot signal in the backscatter signal, to determine channel information of the backscattering link of the third device, and further receive a data signal in the backscatter signal based on the channel information of the backscattering link, thereby improving the signal reception performance.

In some embodiments, the pilot signal can be a specific sequence, which can be predefined, or configured by the first device for the third device. That is, the reflecting device and the opposite device have a consistent understanding of the pilot signal.

Since backscattering communication usually uses low-order modulation schemes, such as on-off keying (OOK) modulation, the OOK modulation scheme can also be used for the pilot signal, that is, a sequence composed of 0s and 1s, where "0" represents transmission of a high-level signal, and "1" can represent transmission of a low-level signal; or vice versa.

In some embodiments, the pilot signal can be a sequence mixed with 0s and 1s, as illustrated in FIG. 14, or can be a sequence of all 0s or all 1s. Using a full high-level signal sequence as the pilot signal is conducive to the opposite device fully performing channel estimation and improving the accuracy of channel estimation.

It should be understood that the present disclosure does not limit the specific position of the pilot signal in the backscatter signal, as long as the reflecting device and the opposite device (that is, the first device) have a consistent understanding of the position of the pilot signal. For example, the pilot signal can be located at the head, tail, or middle of the backscatter signal, or can be distributed in multiple different parts of the backscatter signal in an interleaved manner. Optionally, different pilot parts can be of equal length or unequal length.

In some embodiments, on a resource position where the reflecting device transmits the pilot signal, the primary system transmitter does not transmit a signal, such that the interference of the primary system signal to the pilot signal of the reflecting device, which would affect the accuracy of channel estimation, can be reduced.

Optionally, the resource position used for the reflecting device to transmit the pilot signal is predefined, or can also be configured by the first device.

In some embodiments, in addition to the pilot signal, other signals transmitted by the reflecting device can be in symbiotic communication with the primary system signal, that is, using the same spectrum resources for communication.

Therefore, in the present disclosure, by adding the pilot signal into the backscatter signal, the receiving device can perform channel estimation on the backscattering link based on the pilot signal, and further receive the data in the backscatter signal based on the estimated channel information of the backscattering link, thereby improving the data reception performance.

FIG. 15 is a schematic diagram of a wireless communication method 200 according to the present disclosure. As illustrated in FIG. 15, the method 200 includes at least part of the following content.

At S201, a second device transmits a first signal through active transmission, and transmits a third signal through active transmission; and a third device transmits a second signal through backscattering, where the second signal can be obtained by backscattering a fourth signal, and the fourth signal is transmitted through active transmission.

Correspondingly, the first device receives a first target signal and a second target signal, where the first target signal includes the first signal and the second signal, and the second target signal includes the third signal.

In some embodiments, the first device can be a primary system receiver. For example, the first device can be a network device, such as a base station in a cellular communication system, or an AP in a Wi-Fi system. Alternatively, the first device can be a terminal device, such as a conventional terminal in a cellular communication system, or a STA in a Wi-Fi system.

In some embodiments, the second device can be a primary system transmitter. For example, the second device can be a terminal device, such as a traditional terminal in a cellular communication system, or a STA in a Wi-Fi system. Alternatively, the first device can be a network device, such as a base station in a cellular communication system, or an AP in a Wi-Fi system.

In some embodiments, the third device can be a secondary system transmitter.

In embodiments of the present disclosure, the third device is known as a reflecting device, or a backscatter device (BD), or a zero-power device, or a zero-power terminal, or an ambient power-enabled IoT device.

In some specific embodiments, the first device is a network device in a cellular system, the second device is a terminal device in the cellular system, and the third device is a reflecting device.

In other specific embodiments, the first device is a terminal device in a cellular system, the second device is a network device in the cellular system, and the third device is a reflecting device.

In yet other specific embodiments, both the first device and the second device are terminal devices in a cellular system, and the third device is a reflecting device.

In some specific embodiments, the first device is an AP in a Wi-Fi system, the second device is a STA in the Wi-Fi system, and the third device is a reflecting device.

In some specific embodiments, the first device is a STA in a Wi-Fi system, the second device is an AP in the Wi-Fi system, and the third device is a reflecting device.

In some embodiments, the first signal, the third signal, and the fourth signal are also known as primary system signals, the second signal is also known as a secondary system signal or backscatter signal. The primary system signal includes a pilot signal, then the second signal obtained by the third device backscattering the fourth signal can also include a pilot signal. That is, it is not necessary to add a pilot signal into the backscatter signal.

In some embodiments, the fourth signal can be transmitted by the second device, that is, the carrier signal for backscattering can be provided by the primary system transmitter.

In some embodiments, the first signal and the fourth signal can be the same signal, that is, the third device can obtain the second signal by backscattering the first signal.

It should be understood that the present disclosure does not limit a transmission direction of the fourth signal. For example, the fourth signal may be a downlink signal, an uplink signal, or a sidelink signal. That is, the carrier signal for backscattering can be a downlink signal, an uplink signal, or a side link signal.

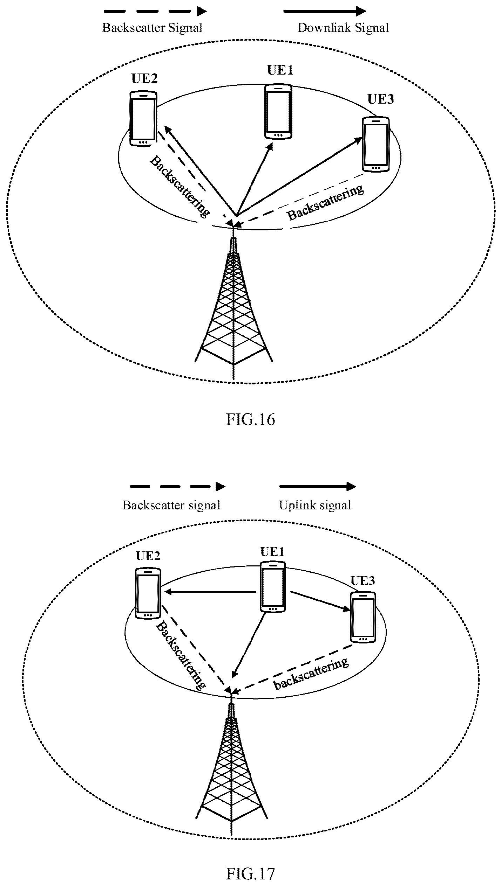

As illustrated in FIG. 16, a network device transmits a downlink (DL) signal to UE1, but UE2 and UE3 also receive the DL signal. Therefore, UE2 and UE3 can perform backscattering based on the DL signal.

As illustrated in FIG. 17, UE1 sends an uplink (UL) signal to a network device, but UE2 and UE3 also receive the UL signal. Therefore, UE2 and UE3 can perform backscattering based on the UL signal.

In some embodiments, a chip width of the second signal and a chip width of the fourth signal satisfy a K-fold relationship, thereby realizing symbiotic communication between the primary and secondary systems, where K is greater than 1. For example, a symbol width of a backscattering symbol is a symbol width of K OFDM symbols.

In some embodiments, a time-domain resource for transmitting the first signal by the second device and a time-domain resource for transmitting the second signal by the third device at least partially overlap. For example, the first signal and the second signal are sent within the same time period.

In some embodiments, the first target signal and the second target signal are received on different time-domain resources. For example, the first target signal and the second target signal are received in different time periods or different time units.

In some embodiments, the first target signal and the second target signal can be used to determine the channel information of the backscattering link of the third device. For example, the first device can perform channel estimation on the first target signal and the second target signal separately, and determine the channel information of the backscattering link based on a difference in channel estimation results of the first target signal and the second target signal. Further, the first device can receive a data signal in the second signal based on the channel information of the backscattering link.

In some embodiments, the first target signal can be considered as a signal received when the reflecting device performs backscattering, and the second target signal can be considered as a signal received when the reflecting device does not perform backscattering.

In some embodiments, the primary system signal can be continuously transmitted to allow the reflecting device to perform backscattering when needed. The first signal and the third signal can be considered as two parts of the continuously transmitted primary system signal. When the reflecting device performs backscattering, the primary system receiver can simultaneously receive the primary system signal (including the pilot signal) and the backscatter signal (including a backscattering signal of the pilot signal of the primary system) obtained by backscattering the primary system signal by the reflecting device. Therefore, when the primary system receiver performs channel estimation using the pilot signal of the primary system, the obtained channel estimation result can be considered as a sum of the primary system link channel and the backscattering link channel.

That is, H₁ = H_{primary system channel} + H_{backscattering link channel}

In the above, H₁ represents the channel estimation result obtained according to the first target signal, H_{primary system channel} represents the primary system link channel, and H_{backscattering link channel} represents the backscattering link channel.

When the reflecting device does not perform backscattering, the primary system receiver can receive the primary system signal (including the pilot signal). Therefore, when the primary system receiver performs channel estimation using the pilot signal of the primary system, the obtained channel estimation result only includes the primary system link channel.
That is, H₂ = H_{primary system channel}

In the above, H₂ represents the channel estimation result obtained according to the second target signal, and H_{primary system channel} represents the primary system link channel.

Further, the primary system receiver can determine the channel information of the backscattering link based on the difference between H₁ and H₂.

For example, H_{backscattering link} channel = H₁ - H₂.
Therefore, in the present disclosure, when estimating the channel information of the backscattering link, the reflecting device does not need to transmit a dedicated pilot signal, which can save pilot overhead and also avoid affecting the primary system.

Further, the first device can receive the data part in the backscatter signal transmitted by the third device based on the channel information of the backscattering link of the third device.

In some embodiments, the primary system link channel can be considered the same or similar in the two cases when the reflecting device performs backscattering and does not perform backscattering. For example, the reflecting device performs backscattering and does not perform backscattering in adjacent time periods, or the interval is short, or the time length of performing backscattering and not performing backscattering is less than a certain threshold. In these cases, it can be considered that the primary system channel has not changed.

In the following, the specific implementation of the above channel estimation method will be explained in conjunction with specific embodiments.

Embodiment 1: In some embodiments, a time-domain position of the target time unit is predefined, or configured by the first device or the second device.

For example, the target time unit can be a time unit dedicated for channel estimation, or called a channel estimation time unit.

For example, in symbiotic communication, a specific time unit for channel estimation can be reserved. On this time unit, the reflecting device switches between two states of performing and not performing backscattering. Thus, the primary system receiver can receive the first target signal including the backscatter signal and the second target signal not including the backscatter signal. Further, the primary system receiver can determine the channel information of the link of the reflecting device based on the first target signal and the second target signal.

In some embodiments, on the target time unit, continuous transmission of the primary system signal is needed, to allow the reflecting device to switch between the two states on this target time unit. Thus, the primary system receiver can receive the first target signal including the backscatter signal and the second target signal not including the backscatter signal, and further can determine the channel information of the link of the reflecting device based on the first target signal and the second target signal.

In some embodiments, the target time unit is periodic.

For example, a period length of the target time unit can be an integer multiple of a time unit length of the primary system.

In a specific embodiment, when the reflecting device coexists with the NR system, the communication between the base station and the traditional terminal in the NR system is in the primary communication system, and the backscattering communication is in the auxiliary communication system. In this case, the period length of the time unit for channel estimation can be an integer multiple of a slot or radio frame.

In some embodiments, the period of the target time unit can be predefined, or configured by the first device or the second device.

For example, the primary system transmitter and the reflecting device can know the period of the target time unit in advance, or the primary system receiver can notify the primary system transmitter and the reflecting device of the period of the target time unit, or the primary system transmitter can notify the primary system receiver and the reflecting device of the period of the target time unit.

In some embodiments, the length of the target time unit can be predefined, or configured by the first device or the second device.

For example, the primary system transmitter and the reflecting device can know the length of the target time unit in advance, or the primary system receiver can notify the primary system transmitter and the reflecting device of the length of the target time unit, or the primary system transmitter can notify the primary system receiver and the reflecting device of the length of the target time unit.

In some embodiments, the length of the target time unit can be an integer multiple of the time unit length of the primary system.

For example, if the primary system is an NR system, the target time unit can be one slot, multiple slots, one radio frame, or multiple radio frames.

In some embodiments, within a period, the distribution of the target time unit satisfies a first pattern.

In some embodiments, the first pattern is predefined, or configured by the first device or the second device.

Optionally, when the target time unit includes multiple slots or multiple radio frames, these multiple slots or multiple radio frames can be continuous or discontinuous. Among these slots or radio frames, the reflecting device performs backscattering on some slots or radio frames, and does not perform backscattering on the other slots or radio frames.

In some embodiments, the target time unit includes a first time period and a second time period, where the first target signal is received in the first time period, and the second target signal is received in the second time period. That is, the reflecting device performs backscattering in the first time period and does not perform backscattering in the second time period.

It should be understood that the present disclosure does not limit the order of the first time period and the second time period. For example, the first time period can be after the second time period, or the first time period can be before the second time period.

In some embodiments, the positions of the first time period and the second time period in the target time unit are predefined, or configured by the first device or the second device. That is, in which time periods the reflecting device performs backscattering and in which time periods the reflecting device does not perform backscattering, is known in advance or is configured by the primary system receiver or the primary system transmitter.

For example, the primary system transmitter and the reflecting device know in advance the positions of the first time period and the second time period in the target time unit, or the primary system receiver notifies the primary system transmitter and the reflecting device of the positions of the first time period and the second time period in the target time unit, or the primary system transmitter notifies the primary system receiver and the reflecting device of the positions of the first time period and the second time period in the target time unit.

In some embodiments, the lengths of the first time period and the second time period are predefined, or configured by the first device or the second device.

Optionally, the lengths of the first time period and the second time period can be the same or different.

For example, the primary system transmitter and the reflecting device know in advance the lengths of the first time period and the second time period, or the primary system receiver notifies the primary system transmitter and the reflecting device of the lengths of the first time period and the second time period, or the primary system transmitter notifies the primary system receiver and the reflecting device of the lengths of the first time period and the second time period.

In some embodiments, a bandwidth of the backscatter signal is the same as a bandwidth of the primary system signal, or the bandwidth of the backscatter signal is a part of the bandwidth of the primary system signal. For example, if the bandwidth of the primary system signal is 100MHz, the bandwidth of the backscatter signal can be the lowest frequency 10MHz of the 100MHz.

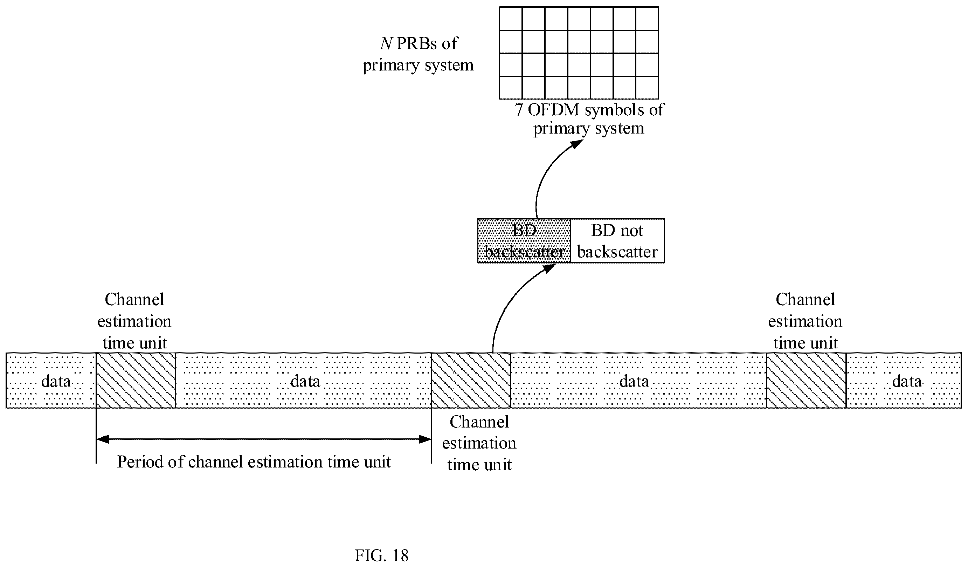

FIG. 18 is a distribution diagram of channel estimation time units provided by embodiments of the present disclosure. It should be understood that within a channel estimation time unit, the reflecting device can switch between two modes of performing and not performing backscattering. For example, within one channel estimation time unit, the reflecting device performs backscattering in the first time period and does not perform backscattering in the second time period. Optionally, the first time period and the second time period can each occupy half a slot, for example, 7 OFDM symbols.

Embodiment 2: The target time unit is determined based on the encoding rule of the data signal in the second signal.

In some embodiments, the target time unit is a time unit used for the third device to transmit a specific bit.

Optionally, the specific bit can be bit 1 (that is, binary 1) or bit 0 (that is, binary 0), depending on the coding rule of the data signal, which is not limited in the present disclosure.

That is, in this embodiment 2, the target time unit is not a dedicated time unit for channel estimation, but a time unit used by the reflecting device to transmit data. This method is conducive to reducing the resource overhead caused by setting up a dedicated channel estimation time unit.

In some embodiments, the reflecting device can use a certain coding rule to encode the data to be transmitted, and then transmit the encoded bit information. For example, one bit is transmitted through one time unit. For ease of distinction and explanation, this time unit is referred to as a bit time unit.

Optionally, the bit time unit can correspond to one slot or multiple slots, or one radio frame or multiple radio frames of the primary system.

In some embodiments, the length of the target time unit can be equal to the length of one bit time unit.

For different coding rules, different waveforms can be used to represent bit "0" and bit "1". If the encoding rule used by the reflecting device represents a specific bit with a waveform composed of a high-level signal and a low-level signal (for example, the first half of the bit time unit is a high-level signal and the second half is a low-level signal, or vice versa), then the reflecting device can perform backscattering in the time period corresponding to the high-level signal in the bit time unit and not perform backscattering in the time period corresponding to the low-level signal. That is, the target time unit is the time unit used to transmit the specific bit, and the waveform used to represent the specific bit is composed of the high-level signal and the low-level signal.

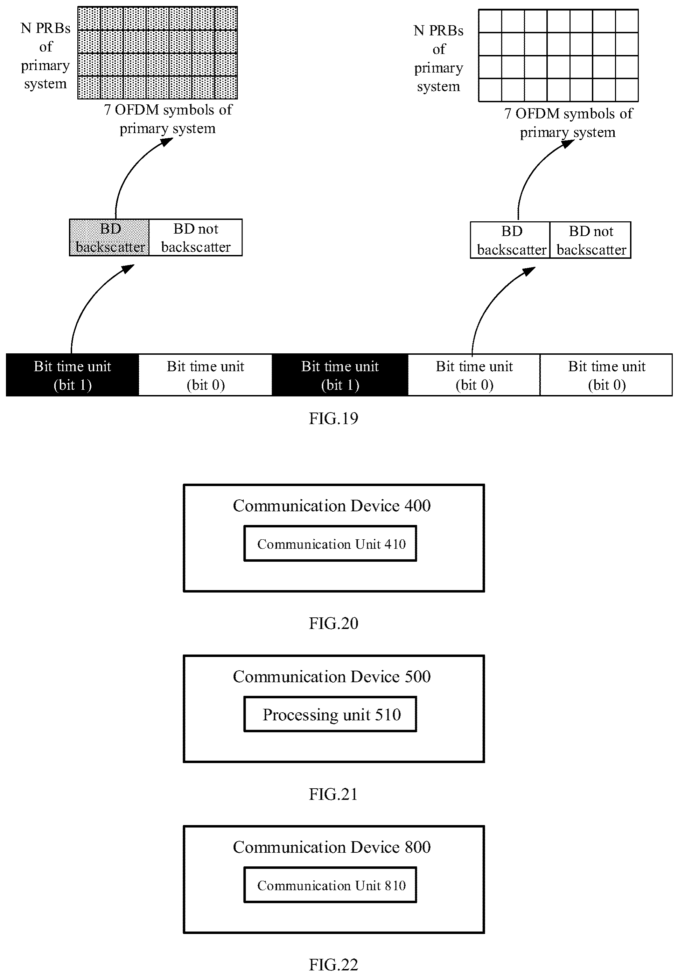

For example, for unipolar return-to-zero encoding, the first half bit period of the bit time unit is a high-level signal and the remaining half bit period is a low-level signal to represent binary "1", and a low-level signal is maintained throughout the bit period to represent binary "0". Then the reflecting device can perform backscattering in the first half bit period of the bit time unit used to transmit bit "1", and not perform backscattering in the remaining half bit period. As illustrated in FIG. 19, in the bit time unit used to transmit bit "1", backscattering is performed during the high-level period, and backscattering is not performed during the low-level period.

For another example, the first half bit period of the bit time unit is a low-level signal and the remaining half bit period is a high-level signal to represent binary "0", and a low-level signal is maintained throughout the bit period to represent binary "1". Then, in the bit time unit used to transmit bit "0", the reflecting device can also not perform backscattering in the first half bit period and perform backscattering in the remaining half bit period.

In some embodiments, the target time unit includes a first time period and a second time period, where the first target signal is received in the first time period, and the second target signal is received in the second time period.

Optionally, the first time period can be a time period corresponding to a high-level signal in the bit time unit used to transmit the specific bit, and the second time period can be the time period corresponding to a low-level signal in the bit time unit used to transmit the specific bit.

It should be understood that the present disclosure does not limit the order of the first time period and the second time period. For example, the first time period can be after the second time period, or the first time period can be before the second time period.

It should be understood that the present disclosure does not limit the lengths of the first time period and the second time period. For example, the lengths of the first time period and the second time period can be the same or different.

In some embodiments, the target time unit is one slot, and the first time period and the second time period can each occupy half a slot, as illustrated in FIG. 19. Alternatively, when the target time unit is multiple slots, the first time period can occupy part of these slots, and the second time period can occupy the other part of these slots.

In some embodiments, the target time unit is one radio frame, and the first time period and the second time period can each occupy half a radio frame. Alternatively, when the target time unit is multiple radio frames, the first time period can occupy part of these radio frames, and the second time period can occupy the other part of these radio frames.

In some embodiments of the present disclosure, the method 200 further includes the following.

Based on the channel estimation result of the signal received on the at least one time unit, whether the at least one time unit is the target time unit is determined, that is, whether the at least one time unit is used to transmit a specific bit is determined, or whether the reflecting device has performed backscattering on the at least one time unit is determined, or the bit information transmitted by the reflecting device on the at least one time unit is determined, for example, whether bit 0 or bit 1 is transmitted.

If the reflecting device does not perform backscattering in both time periods of a time unit, the difference in channel estimation results between these two time periods will be small. If the reflecting device performs backscattering in one time period of a time unit and does not perform backscattering in the other time period, the difference in channel estimation results between these two time periods will be large. Based on this, the first device can select the target time unit for channel estimation. Since different waveforms represent different bit information transmitted by the reflecting device, the difference in channel estimation results of these two time periods can also be used to determine the bit information transmitted by the reflecting device on the time unit.

That is, the present disclosure provides a channel estimation scheme. The primary system receiver can select a time unit for channel estimation based on the channel estimation results of two different time periods within a time unit, and further estimate the channel information of the backscattering link of the reflecting device based on the channel estimation results of the two time periods on that time unit.

The present disclosure also provides a data receiving scheme. The primary system receiver can determine the bit information, such as bit 0 or bit 1, transmitted by the reflecting device on the time unit based on the channel estimation results of two different time periods within a time unit. For example, if the difference in channel estimation results between the two time periods is large, it is determined that a specific bit is transmitted; otherwise, it is determined that a non-specific bit is transmitted. For example, if the specific bit is bit 1, it is determined that bit 1 is transmitted when the difference in channel estimation results between the two time periods is large; otherwise, it is determined that bit 0 is transmitted. For example, if the specific bit is bit 0, it is determined that bit 0 is transmitted when the difference in channel estimation results between the two time periods is large; otherwise, it is determined that bit 1 is transmitted.

In some implementations, the at least one time unit includes a first time unit, and the first time unit includes a first time period and a second time period. The first device can perform channel estimation on the signals received in the first time period and the second time period separately (or use the channel estimation results of the first time period and the second time period to process the data part in these two time periods), to obtain the first channel estimation result and the second channel estimation result. Further, based on the first channel estimation result and the second channel estimation result, the first device determines whether the first time unit is the target time unit.

In some cases, if the difference between the first channel estimation result and the second channel estimation result is large, for example, the difference obtained by subtracting the first channel estimation result from the second channel estimation result is greater than a first threshold, or the difference obtained by subtracting the second channel estimation result from the first channel estimation result is greater than the first threshold, it indicates that the reflecting device performs backscattering in one of the time periods and does not perform backscattering in the other time period. Therefore, it can be determined that the first time unit is the target time unit, that is, the first time unit is the time unit used to transmit a specific bit, that is, the reflecting device transmits a specific bit on the first time unit, such as bit 1 or bit 0.

In other cases, if the difference between the first channel estimation result and the second channel estimation result is small, for example, the difference obtained by subtracting the first channel estimation result from the second channel estimation result is less than the first threshold, or the difference obtained by subtracting the second channel estimation result from the first channel estimation result is less than the first threshold, it indicates that the reflecting device does not perform backscattering in both time periods. Therefore, it can be determined that the first time unit is not the target time unit, that is, the first time unit is not the time unit used to transmit a specific bit, that is, the reflecting device transmits a non-specific bit on the first time unit. If the specific bit is bit 1, the reflecting device transmits bit 0 on the first time unit; or if the specific bit is bit 0, the reflecting device transmits bit 1 on the first time unit.

In some embodiments, the first threshold can be predefined, or configured by the network device.

In some embodiments, based solely on a pilot resource in the bit time unit, the first device can determine whether the bit time unit is the target time unit for channel estimation that is, whether the bit time unit is used to transmit a specific bit, or whether the reflecting device has performed backscattering on the bit time unit.

In other embodiments, based on the pilot resource in the bit time unit and a resource used for transmitting data signals other than the pilot resource of the primary system, the first device may determine whether the bit time unit is a target time unit for channel estimation, or in other words, determine whether the bit time unit is used to transmit the specific bit, or in other words, determine whether the reflecting device performs backscattering operation on the bit time unit.

Taking a second time unit as an example, whether the at least one time unit is the target time unit is determined based on the channel estimation result of the signal received on the at least one time unit as follows.

Channel estimation and data demodulation is performed on a signal received in a third time period based on the pilot signal in the second time unit, to obtain a third channel estimation result and a first data demodulation result.

Channel estimation and data demodulation is performed on a signal received in a fourth time period based on the pilot signal in the second time unit, to obtain a fourth channel estimation result and a second data demodulation result.

The signal received in the third time period is reconstructed based on the fourth channel estimation result and the first data demodulation result, to obtain a first data signal.

Whether the second time unit is the target time unit is determined based on the received signal in the third time period and the first data signal.

For example, the received signal in the third time period can be subtracted from the first data signal to obtain a residual signal. Further, based on the residual signal, it is determined whether the second time unit is the target time unit.

In some implementations, the first device can perform energy detection on the residual signal, and determine whether the second time unit is the target time unit based on an energy of the residual signal.

For example, if the energy of the residual signal is greater than a second threshold, it is determined that the second time unit is the target time unit, that is, the second time unit is the time unit used to transmit a specific bit.

For another example, if the energy of the residual signal is less than the second threshold, it is determined that the second time unit is not the target time unit, that is, the second time unit is not the time unit used to transmit a specific bit, that is, the reflecting device transmits a non-specific bit on the second time unit. For example, if the specific bit is bit 1, the reflecting device transmits bit 0 on the second time unit; or if the specific bit is bit 0, the reflecting device transmits bit 1 on the second time unit.

In some embodiments, the second threshold can be predefined, or configured by the network device.

In some embodiments, the third time period can be a time period corresponding to the high-level signal when a specific bit is transmitted in the second time unit, and the fourth time period can be a time period corresponding to the low-level signal.

Therefore, in this embodiment 2, there is no need to design a dedicated time unit for channel estimation. Instead, the channel information of the backscattering link can be obtained based on the encoding rule of symbiotic communication, for example, the channel information of the backscattering link can be estimated based on the signal on the time unit used to transmit a specific bit. This method is conducive to reducing resource overhead. At the same time, based on the channel information of the backscattering link, the data demodulation can be performed on the backscatter signal, which is conducive to improving the signal reception performance.

It should be noted that the above technical solution is only exemplified by the reflecting device using OOK modulation. The above technical solution can also be applied to other modulation schemes, such as frequency-shift keying (FSK) modulation. In this case, the reflecting device can perform backscattering on a first frequency and not perform backscattering on a second frequency. Therefore, the primary system receiver can determine the channel information of the backscattering link based on the difference in channel estimation results at the first frequency and the second frequency. The specific determination method is similar to the method of determining the channel information of the backscattering link based on the channel estimation results of the two time periods mentioned above, which will not be repeated here.

In some embodiments, the reflecting device performing backscattering at the first frequency and not performing backscattering at the second frequency, indicates that a specific bit is transmitted, and the reflecting device not performing backscattering on the first frequency and performing backscattering on the second frequency, indicates a non-specific bit is transmitted. Therefore, the primary system receiver can also determine the bit information transmitted by the reflecting device based on the channel estimation results at the first frequency and the second frequency. The specific determination method is similar to the method of determining the bit information transmitted by the reflecting device based on the channel estimation results of the two time periods mentioned above, which will not be repeated here.

In summary, in the present disclosure, in both cases where the reflecting device performs backscattering and where the reflecting device does not perform backscattering, the primary system receiver can obtain the channel information of the backscattering link of the reflecting device by performing channel estimation using the pilot signal of the primary system. Further, based on the channel information of the backscattering link, the data sent by the reflecting device can be received, which can improve the data reception performance. Alternatively, the bit information transmitted by the reflecting device can also be determined based on the channel estimation results under the two conditions, thereby realizing the data reception of the reflecting device.

The method embodiments of the present disclosure are described in detail above in conjunction with FIGS. 13 to 19. The apparatus embodiments of the present disclosure will be described in detail below in conjunction with FIGS. 20 to 24. It should be understood that the dev apparatus ice embodiments correspond to the method embodiments, and similar descriptions can refer to the method embodiments.

FIG. 20 illustrates a schematic block diagram of a communication device 400 according to the present disclosure. As illustrated in FIG. 20, the communication device 400 includes a communication unit 410 configured to receive a first target signal and a second target signal on a target time unit, where the first target signal includes a first signal and a second signal, and the second target signal includes a third signal. The first signal and the third signal are transmitted by a second device through active transmission, and the second signal is transmitted by a third device through backscattering of a fourth signal. The first signal, the third signal, and the fourth signal each include a pilot signal.

In some embodiments, a time-domain position of the target time unit is predefined, or configured by a network device.

In some embodiments, the target time unit is periodic.

In some embodiments, a distribution of the target time unit within one period follows a first pattern.

In some embodiments, the first pattern is predefined, or configured by the network device.

In some embodiments, the target time unit includes a first time period and a second time period, the first target signal is received in the first time period, and the second target signal is received in the second time period.

In some embodiments, positions of the first time period and the second time period in the target time unit are predefined, or configured by the network device.

In some embodiments, lengths of the first time period and the second time period are predefined, or configured by the network device.

In some embodiments, a bandwidth of the second signal is the same as a bandwidth of the first signal, or the bandwidth of the second signal is a part of the bandwidth of the first signal.

In some embodiments, the target time unit is determined based on a coding rule used for a data signal in the second signal.

In some embodiments, the target time unit is a time unit for the third device to transmit a specific bit.

In some embodiments, the target time unit includes a first time period and a second time period, the first target signal is received in the first time period, and the second target signal is received in the second time period. The first time period is a time period corresponding to a high-level signal in the time unit for the third device to transmit a specific bit, and the second time period is a time period corresponding to a low-level signal in the time unit used to transmit the specific bit.

In some embodiments, the specific bit is bit 1.

In some embodiments, the communication device 400 further includes a processing unit configured to determine whether at least one time unit is the target time unit based on a channel estimation result of a signal received on the at least one time unit.

In some embodiments, the at least one time unit includes a first time unit, and the first time unit includes a first time period and a second time period. The processing unit is further configured to: perform channel estimation on signals received during the first time period and the second time period respectively, to obtain a first channel estimation result and a second channel estimation result; and determine whether the first time unit is the target time unit based on the first channel estimation result and the second channel estimation result.

In some embodiments, the processing unit is further configured to determine that the first time unit is the target time unit when a difference between the first channel estimation result and the second channel estimation result is greater than a first threshold.

In some embodiments, the at least one time unit includes a second time unit, and the second time unit includes a third time period and a fourth time period. The processing unit is further configured to: perform channel estimation and data demodulation on a signal received in the third time period based on a pilot signal in the third time period, to obtain a third channel estimation result and a first data demodulation result; perform channel estimation and data demodulation on a signal received in the fourth time period based on a pilot signal in the fourth time period, to obtain a fourth channel estimation result and a second data demodulation result; reconstruct the signal received in the third time period based on the fourth channel estimation result and the first data demodulation result, to obtain a first data signal; and determine whether the second time unit is the target time unit based on the received signal in the third time period and the first data signal.

In some embodiments, the processing unit is further configured to: obtain a residual signal by subtracting the first data signal from the signal received in the third time period; and determine whether the second time unit is the target time unit based on the residual signal.

In some embodiments, the processing unit is further configured to determine that the second time unit is the target time unit when an energy of the residual signal is greater than a second threshold.

In some embodiments, the processing unit is further configured to determine channel information of a backscattering link of the third device based on the first target signal and the second target signal.

In some embodiments, the processing unit is further configured to: perform channel estimation on the first target signal and the second target signal separately; determine the channel information of the backscattering link of the third device based on a difference in channel estimation results of the first target signal and the second target signal.

In some embodiments, the communication unit 410 is further configured to receive a data signal in the second signal based on the channel information of the backscattering link.

In some embodiments, the communication device 400 is a network device or a terminal device.

In some embodiments, the second device is a terminal device or a network device.

In some embodiments, the third device is an ambient power-enabled IoT device.

In some embodiments, the fourth signal and the first signal are the same signal.

Optionally, in some embodiments, the above communication unit can be a communication interface or transceiver, or a communication chip or an input/output interface of a system on chip. The above processing unit can be one or more processors.

It should be understood that the communication device 400 according to the present disclosure corresponds to the first device or the primary system receiver in the method embodiments of the present disclosure, and the operations and other functions of each unit in the communication device 400 are intended to realize the corresponding processes of the first device or the primary system receiver in the methods in FIGS. 13 to 19. For brevity, detailed will not be repeated here.

FIG. 21 illustrates a schematic block diagram of a communication device 500 according to the present disclosure. As illustrated in FIG. 21, the communication device 500 includes a processing unit 510 configured to backscatter a fourth signal during a first time period in a target time unit, and not backscatter the fourth signal during a second time period in the target time unit. The fourth signal is transmitted by a second device through active transmission, and the fourth signal includes a pilot signal.

In some embodiments, the time-domain position of the target time unit is predefined, or configured by the network device.

In some embodiments, the target time unit is periodic.

In some embodiments, within one period, the distribution of the target time unit follows a first pattern.

In some embodiments, the first pattern is predefined, or configured by the network device.

In some embodiments, the positions of the first time period and the second time period in the target time unit are predefined, or configured by the network device.

In some embodiments, the lengths of the first time period and the second time period are predefined, or configured by the network device.

In some embodiments, the first time period is a time period used by the communication device 500 to transmit a specific bit.

In some embodiments, the specific bit is bit 1.

In some embodiments, the communication device 500 is an ambient power-enabled IoT device.

In some embodiments, the second device is a terminal device or a network device.

Optionally, in some embodiments, the above communication unit can be a communication interface or transceiver, or a communication chip or an input/output interface of a system on chip. The above processing unit can be one or more processors.

It should be understood that the communication device 500 according to the present disclosure corresponds to the third device or the reflecting device in the method embodiments of the present disclosure, and the operations and other functions of each unit in the communication device 500 are intended to realize the corresponding processes of the third device or the reflecting device in the methods illustrated in FIGS. 13 to 19. For brevity, this will not be repeated here.

FIG. 22 illustrates a schematic block diagram of a communication device 800 according to the present disclosure. As illustrated in FIG. 22, the communication device 800 includes a communication unit 810 configured to transmit a first signal in a first time period of a target time unit, and transmit a third signal in a second time period of the target time unit, where the first signal and the third signal are transmitted through active transmission, the first signal and the third signal each include a pilot signal, and the first signal is used for the third device to perform backscattering in the first time period.

In some embodiments, a time-domain position of the target time unit is predefined, or configured by a network device.

In some embodiments, the target time unit is periodic.

In some embodiments, within one period, the distribution of the target time unit follows a first pattern.

In some embodiments, the first pattern is predefined, or configured by the network device.

In some embodiments, the positions of the first time period and the second time period in the target time unit are predefined, or configured by the network device.

In some embodiments, the lengths of the first time period and the second time period are predefined, or configured by the network device.

In some embodiments, the bandwidth of the backscatter signal of the third device is the same as the bandwidth of the first signal, or the bandwidth of the backscatter signal of the third device is a part of the bandwidth of the first signal.

In some embodiments, the target time unit is a time unit used by the third device to transmit a specific bit.

In some embodiments, the first time period is a time period corresponding to a high-level signal in the time unit used by the third device to transmit a specific bit, and the second time period is a time period corresponding to a low-level signal in the time unit used to transmit the specific bit.

In some embodiments, the specific bit is bit 1.

In some embodiments, the third device is an ambient powered-enabled IoT device.

In some embodiments, the communication device 800 is a terminal device or a network device.

Optionally, in some embodiments, the above communication unit can be a communication interface or transceiver, or a communication chip or an input/output interface of a system on chip. The above processing unit can be one or more processors.

It should be understood that the communication device 800 according to the present disclosure corresponds to the second device or the primary system transmitter in the method embodiments of the present disclosure, and the operations and other functions of each unit in the communication device 800 are intended to realize the corresponding processes of the second device or the primary system transmitter in the methods illustrated in FIGS. 13 to 19. For brevity, this will not be repeated here.

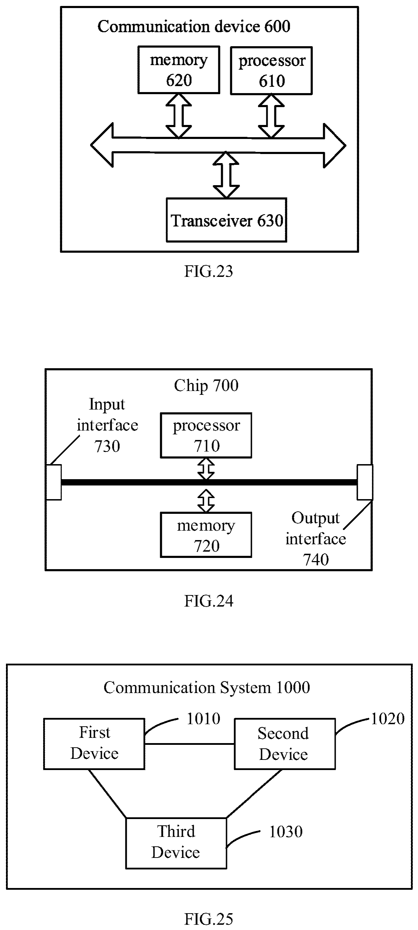

FIG. 23 is a schematic structural diagram of a communication device 600 provided by the present disclosure. The communication device 600 illustrated in FIG. 23 includes a processor 610, which can call and run computer programs from a memory to realize the methods of the present disclosure.

Optionally, as illustrated in FIG. 23, the communication device 600 can also include a memory 620. The processor 610 can call and run computer programs from the memory 620 to realize the methods of the present disclosure.

The memory 620 can be a separate device independent of the processor 610, or can be integrated into the processor 610.

Optionally, as illustrated in FIG. 23, the communication device 600 can also include a transceiver 630. The processor 610 can control the transceiver 630 to communicate with other devices, specifically, to send information or data to other devices, or to receive information or data sent by other devices.

The transceiver 630 can include a transmitter and a receiver. The transceiver 630 can also further include one or more antennas.

Optionally, the communication device 600 can specifically be the first device or the primary system receiver in the present disclosure, and the communication device 600 can realize the corresponding processes realized by the first device or the primary system receiver in the various methods of the present disclosure. For brevity, this will not be repeated here.

Optionally, the communication device 600 can specifically be the second device or the primary system transmitter in the present disclosure, and the communication device 600 can realize the corresponding processes realized by the second device or the primary system transmitter in the various methods of the present disclosure. For brevity, this will not be repeated here.

Optionally, the communication device 600 can specifically be the third device or the reflecting device in the present disclosure, and the communication device 600 can realize the corresponding processes realized by the third device or the reflecting device in the various methods of the present disclosure. For brevity, this will not be repeated here.

FIG. 24 is a schematic structural diagram of a chip 700 of the present disclosure. The chip 700 illustrated in FIG. 24 includes a processor 710, which can call and run computer programs from a memory to realize the methods of the present disclosure.

Optionally, as illustrated in FIG. 24, the chip 700 can also include a memory 720. The processor 710 can call and run computer programs from the memory 720 to realize the methods of the present disclosure.

The memory 720 can be a separate device independent of the processor 710, or can be integrated into the processor 710.

Optionally, the chip 700 can also include an input interface 730. The processor 710 can control the input interface 730 to communicate with other devices or chips, specifically, to obtain information or data sent by other devices or chips.

Optionally, the chip 700 can also include an output interface 740. The processor 710 can control the output interface 740 to communicate with other devices or chips, specifically, to output information or data to other devices or chips.

Optionally, the chip can be applied to the first device or the primary system receiver in the present disclosure, and the chip can realize the corresponding processes realized by the first device or the primary system receiver in the various methods of the present disclosure. For brevity, this will not be repeated here.

Optionally, the chip can be applied to the second device or the primary system transmitter in the present disclosure, and the chip can realize the corresponding processes realized by the second device or the primary system transmitter in the various methods of the present disclosure. For brevity, this will not be repeated here.

Optionally, the chip can be applied to the third device or the reflecting device in the present disclosure, and the chip can realize the corresponding processes realized by the third device or the reflecting device in the various methods of the present disclosure. For brevity, this will not be repeated here.

It should be understood that the chip mentioned in the embodiments of the present disclosure may also be referred to as a system-on-chip, system chip, chip system, or system-on-a-chip, etc.

FIG. 25 is a schematic block diagram of another communication system 1000 provided by an embodiment of the present disclosure. As illustrated in FIG. 25, the communication system 1000 includes a first device 1010, a second device 1020, and a third device 1030.

The first device 1010 may be configured to implement corresponding functions performed by the first device or primary system receiver in the aforementioned methods; the second device 1020 may be configured to implement corresponding functions performed by the second device or primary system transmitter in the aforementioned methods; and the third device 1030 may be configured to implement corresponding functions performed by the third device or reflecting device in the aforementioned methods. For conciseness, details will not be repeated here.

It should be understood that the processor in the embodiments of the present disclosure may be an integrated circuit chip with signal processing capability. In implementation, each step of the method embodiments described above may be completed through hardware-integrated logic circuits in the processor or instructions in software form. The processor may be a general-purpose processor, digital signal processor (DSP), application-specific integrated circuit (ASIC), field-programmable gate array (FPGA), or other programmable logic device, discrete gate or transistor logic device, or discrete hardware component, which may implement or execute the methods, steps, and logic block diagrams disclosed in the embodiments of the present disclosure. The general-purpose processor may be a microprocessor, or the processor may be any conventional processor, etc. The steps of the methods disclosed in the embodiments of the present disclosure may be directly executed by a hardware decoding processor or through a combination of hardware and software modules in the decoding processor. The software modules may reside in mature storage media in the related art such as random access memory (RAM), flash memory, read-only memory (ROM), programmable read-only memory (PROM), electrically erasable programmable read-only memory (EEPROM), or registers. The storage medium is located in a memory, and the processor reads information from the memory and completes the steps of the aforementioned methods in combination with its hardware.

It should be understood that the memory mentioned in the present disclosure can be volatile memory or non-volatile memory, or can include both volatile and non-volatile memory. Non-volatile memory can be read-only memory (ROM), programmable read-only memory (PROM), erasable programmable read-only memory (EPROM), electrically erasable programmable read-only memory (EEPROM), or flash memory. Volatile memory can be random access memory (RAM), which can be used as an external high-speed cache. By way of example but not limitation, many forms of RAM are available, such as static random access memory (SRAM), dynamic random access memory (DRAM), synchronous dynamic random access memory (SDRAM), double data rate synchronous dynamic random access memory (DDR SDRAM), enhanced synchronous dynamic random access memory (ESDRAM), synchronous link dynamic random access memory (SLDRAM), and direct Rambus random access memory (DR RAM). It should be noted that the memory described in the present disclosure is intended to include but not be limited to these and any other suitable types of memory.

It should be understood that the above memory is an exemplary but not limiting description. For example, the memory in the present disclosure can also be static random access memory (SRAM), dynamic random access memory (DRAM), synchronous dynamic random access memory (SDRAM), double data rate synchronous dynamic random access memory (DDR SDRAM), enhanced synchronous dynamic random access memory (ESDRAM), synchronous link dynamic random access memory (SLDRAM), direct Rambus random access memory (DR RAM), etc. In other words, the memory in the present disclosure is intended to include but not be limited to these and any other suitable types of memory.

The present disclosure also provides a computer-readable storage medium for storing computer programs.

Optionally, the computer-readable storage medium can be applied to the first device in the present disclosure, and the computer program can cause the computer to execute the corresponding processes realized by the first device in the various methods of the present disclosure. For brevity, this will not be repeated here.

Optionally, the computer-readable storage medium can be applied to the second device in the present disclosure, and the computer program can cause the computer to execute the corresponding processes realized by the second device in the various methods of the present disclosure. For brevity, this will not be repeated here.

Optionally, the computer-readable storage medium can be applied to the third device in the present disclosure, and the computer program can cause the computer to execute the corresponding processes realized by the third device in the various methods of the present disclosure. For brevity, this will not be repeated here.

The present disclosure also provides a computer program product, which includes computer program instructions.

Optionally, the computer program product can be applied to the first device in the present disclosure, and the computer program instructions can cause the computer to execute the corresponding processes realized by the first device in the various methods of the present disclosure. For brevity, this will not be repeated here.

Optionally, the computer program product can be applied to the second device in the present disclosure, and the computer program instructions can cause the computer to execute the corresponding processes realized by the second device in the various methods of the present disclosure. For brevity, this will not be repeated here.

Optionally, the computer program product can be applied to the third device in the present disclosure, and the computer program instructions can cause the computer to execute the corresponding processes realized by the third device in the various methods of the present disclosure. For brevity, this will not be repeated here.

The present disclosure also provides a computer program.

Optionally, the computer program can be applied to the first device in the present disclosure, and when the computer program is run on a computer, it can cause the computer to execute the corresponding processes realized by the first device in the various methods of the present disclosure. For brevity, this will not be repeated here.

Optionally, the computer program can be applied to the second device in the present disclosure, and when the computer program is run on a computer, it can cause the computer to execute the corresponding processes realized by the second device in the various methods of the present disclosure. For brevity, this will not be repeated here.

Optionally, the computer program can be applied to the third device in the present disclosure, and when the computer program is run on a computer, it can cause the computer to execute the corresponding processes realized by the third device in the various methods of the present disclosure. For brevity, this will not be repeated here.

Ordinary technicians in the field can realize that, for the convenience of description and conciseness, the units and algorithm steps described in the embodiments described in the present disclosure can be realized by electronic hardware, or a combination of computer software and electronic hardware. Whether these functions are realized in hardware or software depends on the specific application and design constraints of the technical solution. Professional technicians can use different methods to realize the described functions for each specific application, but such realization should not be considered to be beyond the scope of the present disclosure.

Technical personnel in the related fields can clearly understand that, for the convenience of description and conciseness, the specific working processes of the above-described systems, devices, and units can refer to the corresponding processes in the method embodiments described above, and will not be repeated here.

In the several embodiments provided in the present disclosure, it should be understood that the disclosed systems, devices, and methods can be realized in other ways. For example, the device embodiments described above are only illustrative. For example, the division of the units is only a logical function division. In actual implementation, there can be other division methods. For example, multiple units or components can be combined or integrated into another system, or some features can be omitted or not executed. Another point is that the displayed or discussed coupling or direct coupling or communication connection can be indirect coupling or communication connection through some interfaces, devices, or units, and can be in electrical, mechanical, or other forms.

The units described as separate components can be or not be physically separated. The components displayed as units can be or not be physical units, that is, they can be located in one place, or they can be distributed to multiple network units. Depending on the actual needs, some or all of the units can be selected to realize the purpose of the present disclosure.

In addition, in the various embodiments of the present disclosure, each functional unit can be integrated into one processing unit, or each unit can exist alone physically, or two or more units can be integrated into one unit.

If the function is realized in the form of a software functional unit and sold or used as an independent product, it can be stored in a computer-readable storage medium. Based on such understanding, the technical solution of the present disclosure, or the part of the technical solution that makes contributions to the related art, or the part of the technical solution can be embodied in the form of a software product. The computer software product is stored in a storage medium and includes several instructions to make a computer device (which can be a personal computer, a server, or a network device, etc.) execute all or part of the steps of the methods described in the various embodiments of the present disclosure. The storage medium mentioned above includes: USB flash drives, mobile hard disks, read-only memory (ROM), random access memory (RAM), magnetic disks, optical disks, and various other media that can store program code.

The above are only specific implementations of the present disclosure, but the scope of protection of the present disclosure is not limited to this. Any changes or replacements that can be easily thought of by those skilled in the art within the technical scope disclosed by the present disclosure should be covered within the scope of protection of the present disclosure. Therefore, the scope of protection of the present disclosure should be subject to the scope of protection defined by the claims.

## Claims

1. A wireless communication method, comprising:
receiving, by a first device, a first target signal and a second target signal on a target time unit, wherein the first target signal comprises a first signal and a second signal, the second target signal comprises a third signal, the first signal and the third signal are transmitted by a second device through active transmission, the second signal is transmitted by a third device through backscattering of a fourth signal, and the first signal, the third signal, and the fourth signal each comprise a pilot signal.

2. The method according to claim 1, wherein a time-domain position of the target time unit is predefined or configured by a network device.

3. The method according to claim 1 or 2, wherein the target time unit is periodic.

4. The method according to claim 3, wherein a distribution of the target time unit within a period follows a first pattern.

5. The method according to claim 4, wherein the first pattern is predefined or configured by the network device.

6. The method according to any one of claims 2 to 5, wherein the target time unit comprises a first time period and a second time period, the first target signal is received during the first time period, and the second target signal is received during the second time period.

7. The method according to claim 6, wherein positions of the first time period and the second time period in the target time unit are predefined or configured by a network device; and/or
lengths of the first time period and the second time period are predefined or configured by the network device.

8. The method according to any one of claims 1 to 6, wherein a bandwidth of the second signal is the same as a bandwidth of the first signal, or the bandwidth of the second signal is a part of the bandwidth of the first signal.

9. The method according to claim 1, wherein the target time unit is determined based on a coding rule used for a data signal in the second signal.

10. The method according to claim 1 or 9, wherein the target time unit is a time unit for the third device to transmit a specific bit.

11. The method according to any one of claims 1, 9, or 10, wherein the target time unit comprises a first time period and a second time period, the first target signal is received during the first time period, and the second target signal is received during the second time period, wherein the first time period is a time period corresponding to a high level in a time unit for the third device to transmit a specific bit, and the second time period is a time period corresponding to a low level in the time unit for the third device to transmit the specific bit.

12. The method according claim 10 or 11, wherein the specific bit is bit 1.

13. The method according to any one of claims 9 to 12, further comprising:
determining whether at least one time unit is the target time unit based on a channel estimation result of a signal received on the at least one time unit.

14. The method according to claim 13, wherein the at least one time unit comprises a first time unit, the first time unit comprises a first time period and a second time period, and determining whether the at least one time unit is the target time unit based on the channel estimation result of the signal received on the at least one time unit comprises:
performing channel estimation on signals received during the first time period and the second time period, respectively, to obtain a first channel estimation result and a second channel estimation result; and
determining whether the first time unit is the target time unit based on the first channel estimation result and the second channel estimation result.

15. The method according to claim 14, wherein determining whether the first time unit is the target time unit based on the first channel estimation result and the second channel estimation result comprises:
based on a difference between the first channel estimation result and the second channel estimation result being greater than a first threshold, determining that the first time unit is the target time unit.

16. The method according to claim 13, wherein the at least one time unit comprises a second time unit, the second time unit comprises a third time period and a fourth time period, and determining whether the at least one time unit is the target time unit based on the channel estimation result of the signal received on the at least one time unit comprises:
performing channel estimation and data demodulation on a signal received during the third time period based on a pilot signal received during the third time period, to obtain a third channel estimation result and a first data demodulation result;
performing channel estimation and data demodulation on a signal received during the fourth time period based on a pilot signal received during the fourth time period, to obtain a fourth channel estimation result and a second data demodulation result;
reconstructing the signal received during the third time period based on the fourth channel estimation result and the first data demodulation result, to obtain a first data signal; and
determining whether the second time unit is the target time unit based on the signal received during the third time period and the first data signal.

17. The method according to claim 16, wherein determining whether the second time unit is the target time unit based on the signal received during the third time period and the first data signal comprises:
obtaining a residual signal by subtracting the first data signal from the signal received during the third time period; and
determining whether the second time unit is the target time unit according to the residual signal.

18. The method according to claim 17, wherein determining whether the second time unit is the target time unit based on the residual signal comprises:
determining that the second time unit is the target time unit when an energy of the residual signal is greater than a second threshold.

19. The method according to any one of claims 1 to 18, further comprising:
determining channel information of a backscattering link of the third device based on the first target signal and the second target signal.

20. The method according to claim 19, wherein determining the channel information of the backscattering link of the third device based on the first target signal and the second target signal comprises:
performing channel estimation on the first target signal and the second target signal separately; and
determining the channel information of the backscattering link of the third device based on a difference between channel estimation results of the first target signal and the second target signal.

21. The method according to claim 19 or 20, further comprising:
receiving a data signal in the second signal based on the channel information of the backscattering link.

22. The method according to any one of claims 1 to 21, wherein the first device is a network device or a terminal device.

23. The method according to any one of claims 1 to 22, wherein the second device is a terminal device or a network device.

24. The method according to any one of claims 1 to 23, wherein the third device is an ambient power-enabled Internet of Things (IoT) device.

25. The method according to any one of claims 1 to 24, wherein the fourth signal and the first signal are the same signal.

26. A wireless communication method, comprising:
backscattering, by a third device, a fourth signal during a first time period in a target time unit, and not backscattering the fourth signal during a second time period in the target time unit, wherein
the fourth signal is transmitted by a second device through active transmission, and the fourth signal comprises a pilot signal.

27. The method according to claim 26, wherein a time-domain position of the target time unit is predefined or configured by a network device.

28. The method according to claim 26 or 27, wherein the target time unit is periodic.

29. The method according to claim 28, wherein a distribution of the target time unit within a period follows a first pattern.

30. The method according to claim 29, wherein the first pattern is predefined or configured by a network device.

31. The method according to any one of claims 26 to 30, wherein positions of the first time period and the second time period in the target time unit are predefined or configured by a network device.

32. The method according to any one of claims 26 to 31, wherein lengths of the first time period and the second time period are predefined or configured by a network device.

33. The method according to claim 26, wherein the target time unit is a time unit for the third device to transmit a specific bit.

34. The method according to claim 33, wherein the first time period is a time period corresponding to a high level in a time unit for the third device to transmit a specific bit, and the second time period is a time period corresponding to a low level in the time unit for the third device to transmit the specific bit.

35. The method according to any one of claims 26 to 34, wherein the third device is an ambient power-enabled Internet of Things (IoT) device.

36. The method according to any one of claims 26 to 35, wherein the second device is a terminal device or a network device.

37. A wireless communication method, comprising:
transmitting, by a second device, a first signal during a first time period in a target time unit, and transmitting a third signal during a second time period in the target time unit, wherein
the first signal and the third signal are transmitted through active transmission, the first signal and the third signal each comprise a pilot signal, and the first signal is used for a third device to perform backscattering during the first time period.

38. The method according to claim 37, wherein a time-domain position of the target time unit is predefined or configured by a network device.

39. The method according to claim 37 or 38, wherein the target time unit is periodic.

40. The method according to claim 39, wherein a distribution of the target time unit within a period follows a first pattern.

41. The method according to claim 40, wherein the first pattern is predefined or configured by a network device.

42. The method according to any one of claims 37 to 41, wherein positions of the first time period and the second time period in the target time unit are predefined or configured by a network device.

43. The method according to any one of claims 37 to 42, wherein lengths of the first time period and the second time period are predefined or configured by a network device.

44. The method according to any one of claims 37 to 42, wherein the a bandwidth of a backscatter signal of a third device is the same as a bandwidth of the first signal, or the bandwidth of the backscatter signal of the third device is a part of the bandwidth of the first signal.

45. The method according to claim 37, wherein the target time unit is a time unit for the third device to transmit a specific bit.

46. The method according to claim 45, wherein the first time period is a time period corresponding to a high level in a time unit for the third device to transmit a specific bit, and the second time period is a time period corresponding to a low level in the time unit for the third device to transmit the specific bit.

47. The method according to claim 45 or 46, wherein the specific bit is bit 1.

48. The method according to any one of claims 37 to 47, wherein the third device is an ambient power-enabled Internet of Things (IoT) device.

49. The method according to any one of claims 37 to 48, wherein the second device is a terminal device or a network device.

50. A communication device, comprising:
a communication unit configured to receive a first target signal and a second target signal on a target time unit, wherein the first target signal comprises a first signal and a second signal, the second target signal comprises a third signal, the first signal and the third signal are transmitted by a second device through active transmission, the second signal is transmitted by a third device through backscattering of a fourth signal, and the first signal, the third signal, and the fourth signal each comprise a pilot signal.

51. A communication device, comprising:
a processing unit configured to backscatter a fourth signal during a first time period in a target time unit, and not backscatter the fourth signal during a second time period in the target time unit, wherein the fourth signal is transmitted by a second device through active transmission, and the fourth signal comprises a pilot signal.

52. A communication device, comprising:
a communication unit configured to transmit a first signal during a first time period in a target time unit, and transmit a third signal during a second time period in the target time unit, wherein the first signal and the third signal each are transmitted through active transmission, the first signal and the third signal each comprise a pilot signal, and the first signal is used for a third device to perform backscattering during the first time period.

53. A communication device, comprising a processor and a memory, wherein the memory is configured to store a computer program, and the processor is configured to call and run the computer program stored in the memory, to execute the method according to any one of claims 1 to 25, or the method according to any one of claims 26 to 36, or the method according to any one of claims 37 to 49.

54. A chip, comprising a processor configured to call and run a computer program from a memory, to cause a device equipped with the chip to execute the method according to any one of claims 1 to 25, or the method according to any one of claims 26 to 36, or the method according to any one of claims 37 to 49.

55. A computer-readable storage medium, configured to store a computer program, the computer program being configured to cause a computer to execute the method according to any one of claims 1 to 25, or the method according to any one of claims 26 to 36, or the method according to any one of claims 37 to 49.

56. A computer program product, comprising computer program instructions, wherein the computer program instructions are configured to cause a computer to execute the method according to any one of claims 1 to 25, or the method according to any one claims of 26 to 36, or the method according to any one of claims 37 to 49.

57. A computer program, wherein the computer program is configured to cause a computer to execute the method according to any one of claims 1 to 25, or the method according to any one of claims 26 to 36, or the method according to any one of claims 37 to 49.
